# EUROPEAN PATENT APPLICATION

(11) **EP 4 703 789 A1**
(43) Date of publication of application: **04.03.2026**
(21) Application number: 24796234.3
(22) Date of filing: 26.04.2024
(51) Int. Cl.: G02F 1/1334, G02F 1/1343

(54) **PHOTOELECTRIC FUNCTIONAL FILM, LIGHT-TRANSMITTING ASSEMBLY AND METHOD FOR PREPARING SAME, AND VEHICLE**

(30) Priority: 26.04.2023 CN 202310463861
(71) Applicant: Fuyao Glass Industry Group Co., Ltd., Fuqing, Fujian 350300 (CN)
(72) Inventor: ZHENG, Guoxin, Fuqing, Fujian 350300 (CN); LIN, Shou, Fuqing, Fujian 350300 (CN); LIN, Shengye, Fuqing, Fujian 350300 (CN); ZHENG, Jiansen, Fuqing, Fujian 350300 (CN)
(74) Representative: Patentanwälte Olbricht Buchhold Keulertz
(86) International application number: PCT/CN2024/090040
(87) International publication number: WO 2024/222861

(57) **Abstract**

Provided are a photoelectric functional film (3), a light-transmitting assembly and a method for preparing same, and a vehicle. The photoelectric functional film (3) comprises a photoelectric functional layer (33), a first conductive layer (34), and a first substrate layer (35) that are arranged in a stacked manner. The first conductive layer (34) comprises two or more electrical divisions insulated from each other, and each electrical division is connected to a corresponding electrode. Also provided are a light-transmitting assembly comprising the photoelectric functional film (3), a method for preparing same, and a vehicle comprising the light-transmitting assembly. The photoelectric functional film (3) can achieve controllable light adjustment in divisions and features a simple structure, compactness, and ease of manufacture.

## Description

The present application claims priority to a Chinese Patent Application No. 202310463861.2, filed with the China National Intellectual Property Administration on April 26, 2023 and entitled "Photoelectric functional film, light-transmitting assembly and method for preparing same, and vehicle", the entire contents of which are incorporated herein by reference.

### Technical Field

The present invention relates to a photoelectric functional film, a light-transmitting assembly, a method for preparing the same, and a vehicle.

### Background Art

PDLC technology is currently being widely adopted in automobiles as a new technology. However, PDLC technology still faces several technical problems that need to be addressed or improved. One of these technical problems relates to PDLC electrode production. A PDLC film in the related art includes two PET layers and liquid crystal high-polymers, in which each PET layer includes an ITO or other conductive layer, and an electrode of a photoelectric functional film is disposed on the PET layer with ITO layers on both sides, making electrode production relatively cumbersome.

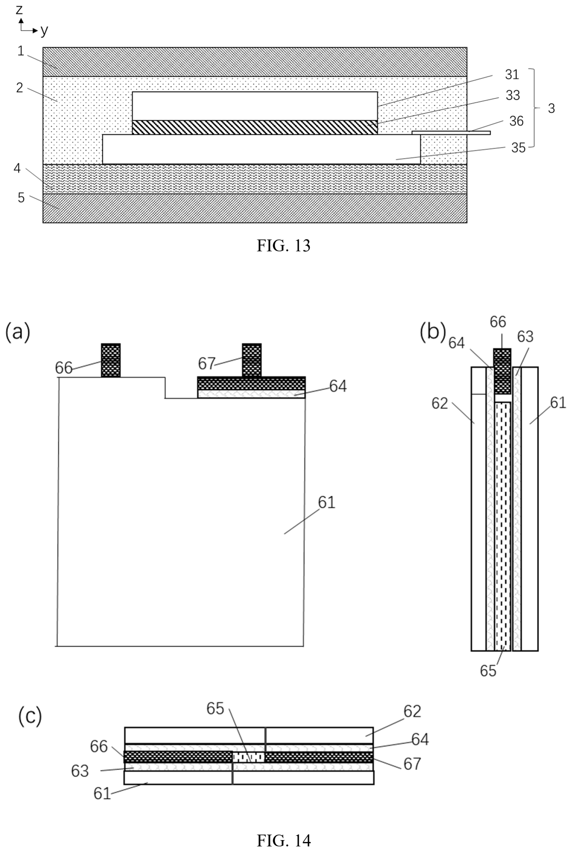

Another technical problem is film encapsulation. A PDLC film is usually encapsulated with a PVB adhesive film. Small molecules in the PVB adhesive film can penetrate into a functional layer in the middle through gaps in the PDLC film, causing the light adjustment function of the functional layer in the penetrated region to fail. At present, there are two main solutions. The first solution is to replace the PVB film with an EVA film, which is less toxic to the PDLC film than PVB. However, glass using only EVA film is inferior to glass using PVB film in terms of some mechanical properties, and there is a lack of mass-produced colored EVA film for color matching. The second solution is to design the PDLC film to be impermeable. The basic idea behind the current solution is to seal gaps around edges of the PDLC film with a specific glue, thereby blocking channels through which small PVB molecules can diffuse into the PDLC film. This method does not require replacing the PVB adhesive film used and does not affect its mechanical properties. However, edge sealing (encapsulation/sealing) with glue requires extensive processing, which is time-consuming and labor-intensive. In addition, in a PDLC film in the related art, upper and lower substrates are usually staggered and cut in half before connecting an electrode (as illustrated in FIG. 14). This requires double-sided gluing during edge sealing, making the process more complicated.

### Summary of the Invention

To solve the above problems, an object of the present invention is to provide a photoelectric functional film, a light-transmitting assembly, a method for preparing the light-transmitting assembly, and a vehicle. The photoelectric functional film can control the light adjustment of different divisions, and has a simplified structure, a small volume, and a low processing difficulty.

To achieve the above object, the present invention provides a photoelectric functional film including: a photoelectric functional layer, a first conductive layer and a first substrate layer that are arranged in a stacked manner, in which the first conductive layer includes two or more electrical divisions insulated from each other, and each electrical division is connected to a corresponding electrode.

In the above photoelectric functional film, the first conductive layer may be provided between the first substrate layer and the photoelectric functional layer, or may be disposed on the side of the photoelectric functional layer facing away from the first substrate layer, or on the side of the first substrate layer facing away from the photoelectric functional layer.

A photoelectric functional film in the related art usually has two conductive layers, which are simultaneously energized or de-energized to control an operating state of the entire photoelectric functional film. The photoelectric functional film of the present invention requires only one (or shared) conductive layer (that is, the first conductive layer) to implement controllable light adjustment of different regions of the photoelectric functional film. Specifically, in the present invention, the first conductive layer is divided into several electrical divisions insulated from each other, and electrodes are independently led out from each electrical division. Thus, a region of the photoelectric functional layer covered by an orthographic projection of each electrical division onto the photoelectric functional layer may form a corresponding independent optical division. By energizing two or more selected electrodes and electrical divisions, the optical divisions corresponding to the energized electrical divisions can be operated, while optical divisions corresponding to the unenergized electrical divisions do not operate actively. The optical divisions are independent from each other in their states, so that light adjustment of different divisions in the photoelectric functional film can be controlled.

According to a specific embodiment of the present invention, the photoelectric functional layer is configured to perform a photoelectric function. No electrically connected components are required in the photoelectric functional layer, and a voltage required for the operation of the photoelectric functional layer can be generated by electrically connecting the electrical divisions in the conductive layer with a power supply. In some specific embodiments, the area of an orthographic projection of the photoelectric functional layer onto the first conductive layer may be substantially equivalent to the area of the conductive layer.

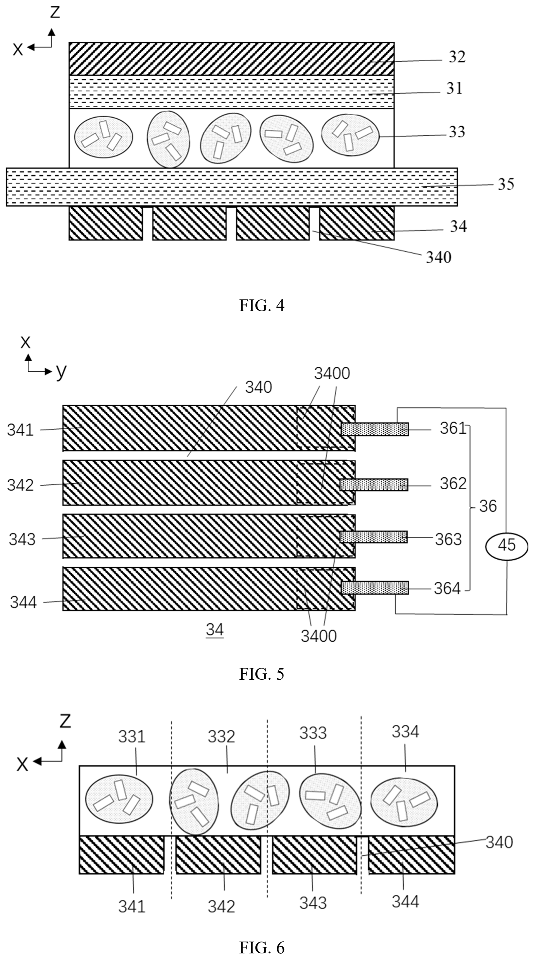

According to a specific embodiment of the present invention, an operating state of each optical division in the photoelectric functional layer is independently controlled by the corresponding electrical division. These electrical divisions are located in the same plane (forming the first conductive layer) and on the same side of the photoelectric functional layer. As illustrated in FIG. 5, when an optical division in the photoelectric functional layer is in operation, both positive and negative electrodes of an external power supply are connected to the first conductive layer.

In the above photoelectric functional film, in the first conductive layer, a horizontal distance between adjacent electrical divisions may be controlled between 10 µm and 1 mm, and may be further controlled between 10 µm and 100 µm. In the present invention, "between" refers to a range inclusive of both endpoints. For example, the horizontal distance between adjacent electrical divisions may be specific values such as 10 µm, 20 µm, 30 µm, 40 µm, 50 µm, 60 µm, 70 µm, 80 µm, 90 µm, 100 µm, 200 µm, 300 µm, 400 µm, 500 µm, 600 µm, 700 µm, 800 µm, 900 µm, and 1000 µm, or a range with any two of these specific values as endpoints.

In the above photoelectric functional film, the material for the first conductive layer may be a metallic conductor (including metal, metal oxide, and the like) or a non-metallic conductor. The metallic conductor may include a transparent conductive oxide (TCO) and/or silver, and the non-metallic conductor may be a carbon material, such as a carbon nanomaterial (carbon nanotube) or graphite. In some specific embodiments, the material for the first conductive layer specifically includes one or more of TCO, silver and carbon materials, and the first conductive layer may be a TCO layer, a nanosilver layer, a carbon layer (such as a graphite layer or a carbon nanotube layer), or the like.

In the above first conductive layer, the TCO may include one or more of indium tin oxide (ITO), aluminum-doped tin oxide (AZO) and fluorinated tin oxide (FTO), and the silver may be nanosilver, such as a nanosilver wire. Therefore, the first conductive layer may include one or more of an ITO layer, an AZO layer, an FTO layer, a nanosilver layer, and a carbon layer.

In the above photoelectric functional film, the material for the photoelectric functional layer may include, but is not limited to, one or more of dye liquid crystal (LC), polymer dispersed liquid crystal (PDLC), guest-host liquid crystal (GHLC), polymer network liquid crystal (PNLC), polymer-stabilized liquid crystal (PSLC), pixel-isolated liquid crystal (PILC), electrochromic device (EC), and suspended particles (SPD).

In the above photoelectric functional film, each electrical division is connected to at least one electrode. The electrodes connected to the respective electrical divisions can be located on the same side, on opposite sides, and/or on adjacent sides of the conductive layer. In some specific embodiments, all the electrodes connected to the first conductive layer may be located on the same side of the photoelectric functional layer (as illustrated in FIG. 5), so as to simplify a preparation process flow of the photoelectric functional film.

In the above photoelectric functional film, orthographic projections of the photoelectric functional layer and the first conductive layer onto the first substrate layer may be located within the periphery of a surface of the first substrate layer. In this case, the area of the first substrate layer is greater than or equal to the area of the photoelectric functional layer and the area of the first conductive layer.

Further, the area of the photoelectric functional layer, the area of the first conductive layer and the area of the first substrate layer may be equal or substantially equivalent.

Alternatively, the orthographic projections of the photoelectric functional layer and the first conductive layer onto the first substrate layer may also be located within edges of the first substrate layer, and therefore the area of the first substrate layer is greater than the area of the photoelectric functional layer and the area of the first conductive layer. In this case, a side surface of the photoelectric functional film is a stepped structure, which helps to simplify an encapsulation and lamination process of the photoelectric functional film.

According to a specific embodiment of the present invention, the above photoelectric functional film may further include a second substrate layer, and the first substrate layer and the second substrate layer are located at two opposite sides of the photoelectric functional layer.

In the above photoelectric functional film, an orthographic projection of the second substrate layer onto the first substrate layer may be located within the edges of the first substrate layer. In this case, the area of the second substrate layer is smaller than the area of the first substrate layer.

In the above photoelectric functional film, in a horizontal direction, a minimum distance from each point in the periphery of the orthographic projection of the second substrate layer onto the first substrate layer to the periphery of the first substrate layer may be between 5 mm and 30 mm. For example, the minimum distance may be specific values such as 5 mm, 6 mm, 7 mm, 8 mm, 9 mm, 10 mm, 15 mm, 20 mm, 25 mm, and 30 mm, or a range with any two of these specific values as endpoints.

In the above photoelectric functional film, an orthographic projection of the photoelectric functional layer onto the second substrate layer may be located within the periphery of a surface of the second substrate layer. In this case, the area of the photoelectric functional layer may be smaller than or equal to the area of the second substrate layer.

In the above photoelectric functional film, an orthographic projection of the photoelectric functional layer onto the first conductive layer may be located within the periphery of a surface of the first conductive layer, and therefore the area of the photoelectric functional layer may be smaller than or equal to the area of the first conductive layer. Further, the orthographic projection of the photoelectric functional layer onto the first conductive layer may be located within edges of the conductive layer, and therefore the area of the photoelectric functional layer is smaller than the area of the first conductive layer.

According to a specific embodiment of the present invention, when the above photoelectric functional film further includes a conductive layer other than the first conductive layer, the conductive layer other than the first conductive layer may be connected or not connected to an external electrode according to actual needs.

In the above photoelectric functional film, the photoelectric functional film may further include a second conductive layer, and the second conductive layer and the first conductive layer may be located at two opposite sides of the photoelectric functional layer respectively.

In the above photoelectric functional film, the second conductive layer can form an induced electric field covering the photoelectric functional layer with the first conductive layer in an energized state.

In the above photoelectric functional film, the second conductive layer may be (directly or indirectly) connected or not connected to an electrode. When the second conductive layer is not connected to an electrode, the second conductive layer may also be used to perform functions that do not require electrical power, such as anti-fog and heat insulation. When the second conductive layer is connected to an electrode, direct current may be applied to the second conductive layer through the electrode while the photoelectric functional layer is operating or before the photoelectric functional layer begins operating. When energized, the second conductive layer heats the photoelectric functional layer, thereby improving an operational response speed of the photoelectric functional layer, especially an operational response speed of SPD-type photoelectric functional layers in low temperature environments. Similarly, the photoelectric functional layer may also be heated by energizing the electrodes of the first conductive layer to improve the operational response speed of the photoelectric functional layer in low temperature environments. In the photoelectric functional film provided by the present invention, light adjustment by different divisions, heating and other functions that do not require electrical power can be performed simultaneously.

In some specific embodiments, the material for the second conductive layer may be a metallic conductor, for example, may include one or more of an ITO layer, an FTO layer, a Low-E film, an infrared reflective film, an anti-radiation film, and a carbon layer, or may be a non-metallic conductor, for example, a carbon material such as a carbon nanomaterial or graphite.

In the above photoelectric functional film, an orthographic projection of the second conductive layer onto the first substrate layer may be located within the edges of the first substrate layer. In this case, the area of the second conductive layer is smaller than that of the first substrate layer.

According to a specific embodiment of the present invention, a layer structure made of an insulating material, that is, an insulating layer, may be further provided in the photoelectric functional film. The insulating layer may be located between the first conductive layer and the photoelectric functional layer or between the second conductive layer and the photoelectric functional layer. The insulating layer can prevent electrical breakdown when a high voltage is applied to the first conductive layer or the second conductive layer. Similarly, a layer structure made of a conductive material may be provided between the first conductive layer and the photoelectric functional layer and/or between the second conductive layer and the photoelectric functional layer, and this layer structure is another conductive layer other than the first conductive layer and the second conductive layer.

Compared with a photoelectric functional film in the related art such as a switchable film that require at least two conductive layers to implement light adjustment, the above photoelectric functional film provided by the present invention requires only one (or shared) conductive layer to implement controllable light adjustment, and thus the photoelectric functional film of the present invention has a simpler structure, lower processing difficulty, and a simpler process flow.

The present invention further provides a light-transmitting assembly including: a first light-transmitting plate; an adhesive layer; a second light-transmitting plate; and a photoelectric functional film, the photoelectric functional film including the above photoelectric functional film provided by the present invention, in which the photoelectric functional film is located between the first light-transmitting plate and the second light-transmitting plate, and the adhesive layer is sandwiched between the first light-transmitting plate and the photoelectric functional film and between the photoelectric functional film and the second light-transmitting plate.

In the above light-transmitting assembly, the material for the adhesive layer may include PVB and/or EVA.

In a specific embodiment of the present invention, when the areas of the photoelectric functional layer, the first conductive layer and the first substrate layer in the photoelectric functional film are equal or equivalent, in the above light-transmitting assembly, the side surface of the photoelectric functional film may also be provided with an adhesive layer having a thickness equal to that of the photoelectric functional film, so as to fix the position of the photoelectric functional film in the light-transmitting assembly.

In a specific embodiment of the present invention, when the orthographic projections of the photoelectric functional layer and the first conductive layer in the photoelectric functional film onto the first substrate layer are located within the edges of the first substrate layer (that is, the area of the first substrate layer is greater than the area of the photoelectric functional layer and the area of the first conductive layer), the adhesive layer in the light-transmitting assembly may further include a first adhesive layer and a second adhesive layer. The first adhesive layer is sandwiched between the first light-transmitting plate and the first substrate layer of the photoelectric functional film, and the second adhesive layer is sandwiched between the first substrate layer of the photoelectric functional film and the second light-transmitting plate.

In the above light-transmitting assembly, the first adhesive layer may include an EVA layer, and the second adhesive layer may include a PVB layer and/or an EVA layer. The first adhesive layer includes an EVA layer, which can reduce the toxic effect on the photoelectric functional layer in the photoelectric functional film and help the photoelectric functional layer to stably perform functions thereof.

The present invention further provides a method for preparing the above light-transmitting assembly, the method including: stacking the first light-transmitting plate, a raw adhesive film for the adhesive layer, the photoelectric functional film, and the second light-transmitting plate in sequence, followed by heating for molding and then laminating to obtain switchable glass.

According to a specific embodiment of the present invention, when the areas of the photoelectric functional layer, the first conductive layer, and the first substrate layer in the photoelectric functional film are equal, the above method may further include providing an adhesive film on the side surface of the photoelectric functional film after stacking the raw materials of each layer in sequence and before heating and molding. Specifically, the raw adhesive film for the adhesive layer having a thickness equal to or equivalent to that of the photoelectric functional film may be provided on the side surface of the photoelectric functional film.

According to a specific embodiment of the present invention, when the orthographic projections of the photoelectric functional layer and the first conductive layer in the photoelectric functional film onto the first substrate layer are located within the edges of the first substrate layer, the above method may include stacking the first light-transmitting plate, a raw adhesive film for the first adhesive layer, the photoelectric functional film, a raw adhesive film for the second adhesive layer, and the second light-transmitting plate in sequence, followed by heating for molding and then laminating to obtain the above light-transmitting assembly. Since a stepped structure is formed on the side surface of the photoelectric functional film, the raw adhesive films of the first adhesive layer and the second adhesive layer can be melted from both sides of the photoelectric functional film at the same time and thus sandwiched between the first light-transmitting plate and the photoelectric functional film and between the photoelectric functional film and the second light-transmitting plate, respectively. Therefore, the method may include no operation of providing an adhesive film on the side surface of the photoelectric functional film.

The present invention also provides a vehicle, having glass that includes the above light-transmitting assembly.

The present invention has at least the following beneficial effects:
1. The photoelectric functional film provided by the present invention can control the light adjustment of different divisions with only one conductive layer, resulting in a simplified structure, a compact size, and low costs.
2. All the electrodes in the photoelectric functional film provided by the present invention are connected to the same conductive layer (first conductive layer), and can be further located on the same side of the photoelectric functional film, which can greatly reduce the requirements for electrode production equipment, reduce the difficulty and production costs of the electrode processing process, and significantly improve the yield of the photoelectric functional film.
3. The light-transmitting assembly provided by the present invention can effectively prevent the photoelectric functional film from being permeated by toxic adhesive films during use, especially under high-temperature conditions, and is beneficial to maintaining the light adjustment function of the photoelectric functional film. Meanwhile, the light-transmitting assembly has high adhesive strength between the layer structures, has high mechanical properties and impact resistance, and also has good aging resistance.
4. In the production process of the light-transmitting assembly provided by the present invention, there is no need to provide an adhesive film on the side surface of the photoelectric functional film, thereby reducing the processing difficulty, simplifying the process flow, and saving material costs.

### Brief Description of Drawings

FIGS. 1 to 4 are schematic structural diagrams of a photoelectric functional film of Embodiment 1.
FIG. 5 is a schematic structural diagram of a first conductive layer and an electrode in the photoelectric functional film of Embodiment 1.
FIG. 6 is a schematic structural diagram of the first conductive layer and a photoelectric functional layer in the photoelectric functional film of Embodiment 1.
FIG. 7 is a schematic diagram showing the electrode leading-out of the first conductive layer in the photoelectric functional film of Embodiment 1.
FIG. 8 is a photograph of the photoelectric functional film of Embodiment 1.
FIG. 9 is a photograph of the photoelectric functional film of Embodiment 1 in an operating state.
FIG. 10 is a schematic structural diagram of a photoelectric functional film of Embodiment 2.
FIGS. 11 to 12 are schematic structural diagrams of a photoelectric functional film of Embodiment 3.
FIG. 13 is a schematic structural diagram of a light-transmitting assembly of Embodiment 4.
FIG. 14 is a schematic structural diagram of a photoelectric functional film in the related art.

### Brief Description for the Numerical References

1: first light-transmitting plate; 2: first adhesive layer; 3: photoelectric functional film; 4: second adhesive layer; 5: second light-transmitting plate.
31: second substrate layer; 32: second conductive layer; 33: photoelectric functional layer; 34: first conductive layer; 35: first substrate layer; 36: electrode; 37: first insulating layer; 38: second insulating layer.
340: etched line; 3400: outer connection region; 341: first electrical division; 342: second electrical division; 343: third electrical division; 344: fourth electrical division; 331: first optical division ; 332: second optical division; 333: third optical division; 334: fourth optical division; 361: first electrode; 362: second electrode; 363: third electrode; 364: fourth electrode; 360: common electrode.
41: external electrode; 42: conductive copper foil; 43: cured silver paste; 44: heat-resistant tape; 45: external power supply.
61: second substrate layer; 62: first substrate layer; 63: first conductive layer; 64: second conductive layer; 65: photoelectric functional layer; 66: first FPC electrode; 67: second FPC electrode.

### Detailed Description

In order to have clear understanding of the technical features, objects, and beneficial effects of the present invention, technical solutions of the present invention will be described in detail below, which, however, cannot be understood as limitations on the scope of implementation of the present invention.

In the present invention, it can be understood that the terms "upper", "lower", "horizontal" and the like indicate orientations or positional relations based on orientations or positional relations illustrated in the drawings, which are only for the convenience of describing the present invention and simplifying the description, rather than indicating or implying that devices or elements referred to must have a specific orientation, be constructed or operated in a specific orientation, and therefore cannot be understood as limitations on the present invention. The terms "first", "second" and the like are used for descriptive purposes only, and cannot be understood as indicating or implying relative importance or implicitly indicating the number of technical features indicated. Thus, the features defined as "first," "second", and the like may explicitly or implicitly include one or more of such features.

In the present invention, an orthographic projection refers to a projection along a thickness direction of a photoelectric functional film.

In the present invention, an orthographic projection of A onto B is located within the periphery of a surface of B, which means that the orthographic projection of A does not exceed the periphery of a surface of B. The orthographic projection of A may be completely located within the surface of B, in which case no edge of the orthographic projection of A overlaps with any edge of B. Alternatively, at least a part of the edges of the orthographic projection of A overlaps with a part of the edges of B.

In the present invention, the orthographic projection of A onto B is located within the edges of B, which means that the orthographic projection of A is completely located within the surface of B, and no edge of the orthographic projection of A overlaps with any edge of B.

A three-dimensional coordinate system *xyz* is introduced in the drawings of the present invention, with a direction from a first substrate layer to a second substrate layer being a direction in which the z-axis coordinate increases, a plane where a photoelectric functional layer is located being an *xy* plane formed by the x-axis and the y-axis, and an electrode lead-out direction being a direction in which the y-axis coordinate increases.

### Embodiment 1

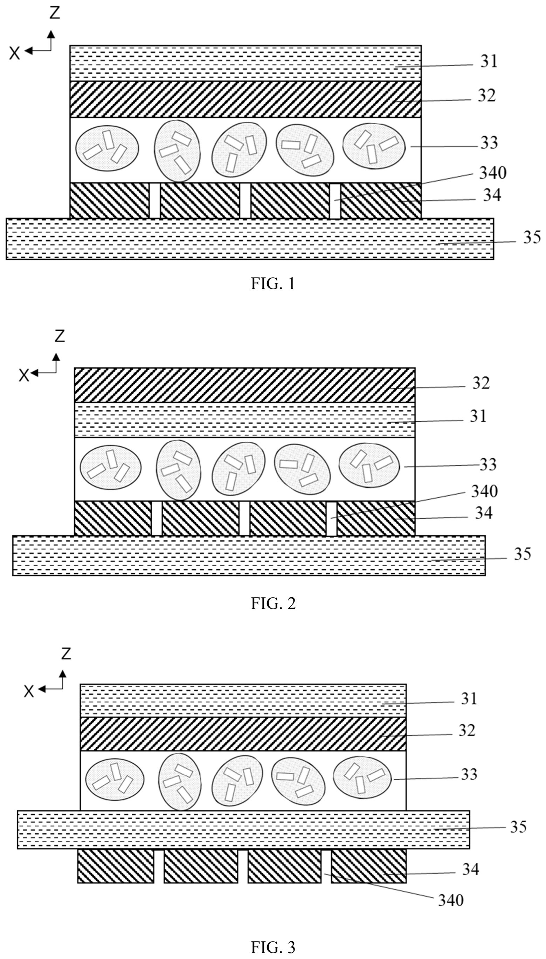

The present embodiment provides a photoelectric functional film. As illustrated in FIGS. 1 to 4, the photoelectric functional film includes a second substrate layer 31, a second conductive layer 32, a photoelectric functional layer 33, a first conductive layer 34, and a first substrate layer 35 that are arranged in a stacked manner.

The photoelectric functional layer 33 is located between the second substrate layer 31 and the first substrate layer 35, and the second conductive layer 32 and the first conductive layer 34 are located at two opposite sides of the photoelectric functional layer 33 respectively.

The photoelectric functional layer 33 is used to implement a photoelectric function, and may specifically be a photoelectric functional film that operates with an alternating voltage, such as a PDLC film or an SPD film.

The material for the first conductive layer 34 is one or more of ITO, FTO, AZO, nanosilver, a carbon nanomaterial, and graphite, and the sheet resistance of ITO and FTO is 100 Ω/□ to 300 Ω/□.

After etching, (N - 1) etched lines 340 are formed in the first conductive layer 34. The etched lines 340 are non-conductive, thus dividing the first conductive layer into N electrical divisions insulated from each other, where N ≥ 2. The number of electrical divisions in the first conductive layer 34 can be adjusted based on actual needs. For example, in a case of four electrical divisions in the first conductive layer 34, as illustrated in FIG. 5, the first conductive layer 34 of the present embodiment is provided with three parallel etched lines 340, and the etched lines 340 divide the first conductive layer 34 into four electrical divisions insulated from each other. In a horizontal direction (a direction perpendicular to a thickness of the photoelectric functional film), the first conductive layer 34 is divided into a first electrical division 341, a second electrical division 342, a third electrical division 343, and a fourth electrical division 344 that are disposed in sequence. A horizontal distance between two adjacent electrical divisions is a width of each etched line 340, and in the present embodiment, the horizontal distance is between 10 µm and 100 µm.

The periphery of each electrical division in the first conductive layer 34 is provided with an outer connection region 3400, which is used as an electrode or for leading out an electrode. The position of the outer connection region 3400 of each electrical division can be adjusted according to actual needs. The outer connection regions 3400 may be located on the same side, on opposite sides and/or on adjacent sides of the first conductive layer 34. When the outer connection regions 3400 of the electrical divisions are located on the same side of the first conductive layer 34, electrodes can be conveniently led out, and a common electrode can be conveniently produced. In some embodiments, the outer connection region 3400 may be a region of each electrical division in the first conductive layer 34 that protrudes outward with respect to an edge of the photoelectric functional layer 33 so as to lead out an electrode.

In the present embodiment, the outer connection region 3400 of each electrical division in the first conductive layer 34 is connected to at least one electrode. Specifically, the first electrical division 341 is connected to a first electrode 361, the second electrical division 342 is connected to a second electrode 362, the third electrical division 343 is connected to a third electrode 363, and the fourth electrical division 344 is connected to a fourth electrode 364. The first electrode 361, the second electrode 362, the third electrode 363, and the fourth electrode 364 may be located on the same side, on opposite sides, and/or on adjacent sides of the first conductive layer 34. FIG. 5 illustrates a case where these electrodes are located on the same side of the first conductive layer 34.

The material of the second conductive layer 32 includes a metallic conductor and/or a non-metallic conductor, and specifically may be ITO, FTO, Low-E, a silver-containing coating (a double silver coating, a triple silver coating, and the like), a carbon material (a carbon nanomaterial, graphite), and the like. When the first conductive layer 34 is energized (typically with alternating current), the second conductive layer 32 can form an induced electric field with the first conductive layer 34. This induced electric field covers at least a part of the photoelectric functional layer 33, causing an optical division in the photoelectric functional layer 33 located in the induced electric field to operate.

Further, the second conductive layer 32 may also be connected to an electrode. When the photoelectric functional film is in operation, direct current can be applied to the second conductive layer 32 through the electrode. Thus, the second conductive layer 32 heats the photoelectric functional layer 33, thereby improving an operational response speed of the photoelectric functional layer 33 in low temperature environments.

Alternatively, the second conductive layer 32 may also be used to implement other functions that do not require electrical power, such as anti-fog and heat insulation. In this case, the second conductive layer 32 may not be connected to an electrode.

In the present embodiment, the second conductive layer 32 and the first conductive layer 34 may be in direct contact with the photoelectric functional layer 33, and the second conductive layer 32 and the photoelectric functional layer 33 may be separated by a structure formed of another conductor or insulating material, such as a transparent substrate or another conductive layer. The first conductive layer 34 is in direct contact with the photoelectric functional layer 33, or may also be separated from the photoelectric functional layer 33 by a structure formed of another conductor or insulating material, such as a transparent substrate or another conductive layer, as long as the first conductive layer 34 has a corresponding conductive layer on the opposite sides of the photoelectric functional layer 33.

As illustrated in FIG. 1, the first conductive layer 34 and the second conductive layer 32 are in direct contact with the photoelectric functional layer 33. As illustrated in FIG. 2, the first conductive layer 34 is in direct contact with the photoelectric functional layer 33, while the second conductive layer 32 and the photoelectric functional layer 33 are separated by the second substrate layer 31. As illustrated in FIG. 3, the second conductive layer 32 is in direct contact with the photoelectric functional layer 33, while the first conductive layer 34 and the photoelectric functional layer 33 are separated by the first substrate layer 35. As illustrated in FIG. 4, the second conductive layer 32 and the photoelectric functional layer 33 are separated by the second substrate layer 31, while the first conductive layer 34 and the photoelectric functional layer 33 are separated by the first substrate layer 35. It can be understood that the positions of the second conductive layer 32 and the first conductive layer 34 in FIGS. 1 to 4 may be interchanged.

Compared with a case illustrated in FIGS. 1 to 3, in a case where the positions of the second conductive layer 32 and the first conductive layer 34 are interchanged as illustrated in FIG. 4, the second conductive layer 32 and the photoelectric functional layer 33 are located on an exposed surface of the photoelectric functional film. This not only allows an electrode to be set on surface of a switchable layer and reduces the difficulty of electrode production, but also helps to better control the etching of the first conductive layer 34, reduce the difficulty of the etching process, and keep the first conductive layer 34 clean after etching, thereby ensuring the etching quality.

The photoelectric functional layer 33 is divided into optical divisions corresponding to the positions of the electrical divisions in the first conductive layer 34. Taking the photoelectric functional film structures illustrated in FIGS. 1 and 2 as an example, the photoelectric functional layer 33 is divided into a first optical division 331, a second optical division 332, a third optical division 333, and a fourth optical division 334 as illustrated in FIG. 6. The first optical division 331 corresponds to a region where an orthographic projection of the first electrical division 341 of the first conductive layer 34 onto the photoelectric functional layer 33 covers the photoelectric functional layer 33. The second optical division 332 corresponds to a region where an orthographic projection of the second electrical division 342 of the first conductive layer 34 onto the photoelectric functional layer 33 covers the photoelectric functional layer 33. The third optical division 333 corresponds to a region where an orthographic projection of the third electrical division 343 of the first conductive layer 34 onto the photoelectric functional layer 33 covers the photoelectric functional layer 33. The fourth optical division 334 corresponds to a region where an orthographic projection of the fourth electrical division 344 of the first conductive layer 34 onto the photoelectric functional layer 33 covers the photoelectric functional layer 33. In the photoelectric functional film structures illustrated in FIGS. 3 and 4, the photoelectric functional layer 33 and the first conductive layer 34 are separated by the first substrate layer 35, and the division of the photoelectric functional layer 33 is the same as that illustrated in FIG 6.

In the present invention, the areas of the second substrate layer 31, the second conductive layer 32, the photoelectric functional layer 33, the first conductive layer 34 and the first substrate layer 35 may be equal, and the sizes of these layers on the *xy* plane may be the same. In this case, side edges of these layer are substantially flush, which is referred to as a structure A.

Alternatively, the area of the first substrate layer 35 may be greater than the areas of the second substrate layer 31, the second conductive layer 32, the photoelectric functional layer 33, and the first conductive layer 34, so that the first substrate layer 35 protrudes outward relative to the other layer structures, and a stepped structure is formed on a side surface of the photoelectric functional film. That is, orthographic projections of the second substrate layer 31, the second conductive layer 32, the photoelectric functional layer 33, and the first conductive layer 34 onto the first substrate layer 35 are located within edges of the first substrate layer 35, which is referred to as a structure B.

When encapsulating the photoelectric functional film with the structure A, an adhesive film such as PVB and EVA with the same or equivalent thickness as the photoelectric functional film can be filled in a thickness direction of the photoelectric functional film to make the side surface of the photoelectric functional film flush.

Compared with a photoelectric functional film A with the structure A, a photoelectric functional film B with the structure B can further simplify the lamination and encapsulation process. During the encapsulation process, top and bottom surfaces of the photoelectric functional film B are each encapsulated with an adhesive film, without the need to fill an adhesive in a thickness direction of the photoelectric functional film B. Further, a stepped structure on the photoelectric functional film B separates the top and bottom encapsulation adhesive films, preventing harmful colloidal molecules from entering the photoelectric functional layer of the photoelectric functional film B.

In the present embodiment, the photoelectric functional film adopts the structure B. The relative sizes of the respective layer structures in the structure B will be described below. Specifically, the relative sizes of the second substrate layer 31, the second conductive layer 32, the photoelectric functional layer 33, the first conductive layer 34 and the first substrate layer 35 may be as follows.

The orthographic projection of the second substrate layer 31 onto the first substrate layer 35 is located within the edges of the first substrate layer 35. In this case, the area of the second substrate layer 31 is smaller than the area of the first substrate layer 35, and all edges of the orthographic projection of the second substrate layer 31 fall within a surface of the first substrate layer 35 and do not overlap with the edges of the first substrate layer 35. Further, on a horizontal plane (that is, the *xy* plane), a minimum distance from each point in the periphery of the orthographic projection of the second substrate layer 31 onto the first substrate layer 35 to the periphery of the first substrate layer 35 is 5 mm to 30 mm.

The orthographic projections of the second conductive layer 32, the photoelectric functional layer 33, and the first conductive layer 34 onto the first substrate layer 35 are also located within the edges of the first substrate layer 35.

An orthographic projection of the photoelectric functional layer 33 onto the second substrate layer 31 is located within the periphery of a surface of the second substrate layer 31, and the area of the photoelectric functional layer 33 is smaller than or equal to the area of the second substrate layer 31. Specifically, the area of the photoelectric functional layer 33 may be equal to the area of the second substrate layer 31, and edges of the orthographic projection of the photoelectric functional layer 33 onto the second substrate layer 31 overlap with edges of the second substrate layer 31. Alternatively, the area of the photoelectric functional layer 33 may be smaller than the area of the second substrate layer 31, and all the edges of the orthographic projection of the photoelectric functional layer 33 onto the second substrate layer 31 do not extend beyond the edges of the second substrate layer 31 (all the edges of the orthographic projection may be located within the edges of the second substrate layer 31, or a part of the edges of the orthographic projection may overlap with the edges of the second substrate layer 31, and the remaining edges of the orthographic projection may be located within the edges of the second substrate layer 31). In the present embodiment, the area of the photoelectric functional layer 33 is equal to the area of the second substrate layer 31.

An orthographic projection of the second conductive layer 32 onto the second substrate layer 31 is located within the periphery of a surface of the second substrate layer 31, and the area of the second conductive layer 32 is smaller than or equal to the area of the second substrate layer 31.

An orthographic projection of the photoelectric functional layer 33 onto the second conductive layer 32 is located within the periphery of a surface of the second conductive layer 32, and the area of the photoelectric functional layer 33 is smaller than or equal to the area of the second conductive layer 32.

An orthographic projection of the photoelectric functional layer 33 onto the first conductive layer 34 is located within the periphery of a surface of the first conductive layer 34, and the area of the photoelectric functional layer 33 is smaller than or equal to the area of the first conductive layer 34. That is, all edges of the photoelectric functional layer 33 do not extend beyond edges of the first conductive layer 34. In the present embodiment, for a purpose of easily leading out electrodes, the area of the photoelectric functional layer 33 may be smaller than or slightly smaller than that of the first conductive layer 34.

As can be seen from the above, the area relation between the layers is that photoelectric functional layer 33 ≤ second conductive layer 32 ≤ second substrate layer 31 < first substrate layer 35, and the photoelectric functional layer 33 ≤ first conductive layer 34 < first substrate layer 35.

In the present invention, each electrode connected to the first conductive layer 34 may be a wire or an FPC. The electrode can be led out in the following ways.
1. A conductive copper foil 42 is attached to the periphery of the outer connection region 3400 of each electrical division, and an external electrode 41 is fixed on a surface of the conductive copper foil 42, so as to lead out the external electrode.

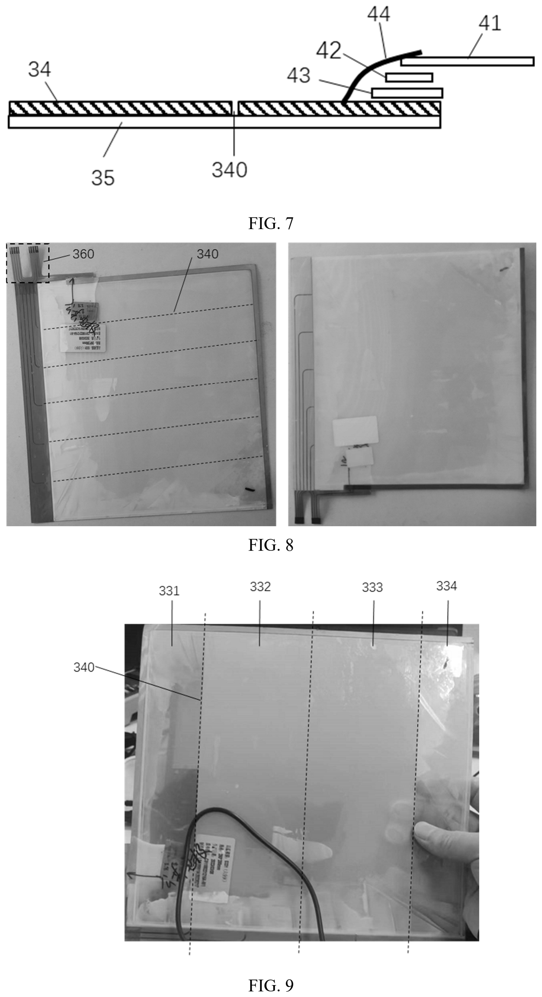

Further optionally, the conductive copper foil 42 may be fixed to the outer connection region 3400 using a cured silver paste 43. The specific method is as follows. As illustrated in FIG. 7, a region (that is, the outer connection region 3400) with a width (1/5 to 4/5 of a length of the electrode, typically 5 mm to 10 mm) is selected at the edge of each electrical division and coated with a silver paste. The thickness of the silver paste is 5 µm to 20 µm. After the silver paste dries, the cured silver paste 43 is formed. The conductive copper foil 42 is attached to a surface of the cured silver paste 43 to lead out the external electrode 41.

**2.** A copper tape with a conductive adhesive is bonded to the edge of the first conductive layer 34 (outer connection region 3400), and then an external electrode is led out.

**In** the above method, the electrode can be fixed and protected by a heat-resistant tape 44.

It can be understood that, in order to clearly illustrate the structures, gaps are shown among the external electrode 41, the conductive copper foil 42, the cured silver paste 43, and the heat-resistant tape 44 in FIG. 7. In actual situations, the above structures are tightly fitted together, and the gaps illustrated in FIG. 7 do not exist.

Further, a common electrode 360 may be disposed at the periphery of the first conductive layer 34, and the common electrode 360 is connected to electrodes corresponding to the respective electrical divisions. FIG. 8 is a photograph of front and back surfaces of a photoelectric functional film having six electrical divisions in the first conductive layer 34 and a common electrode disposed at the edge. It can be seen that the six electrical divisions in the first conductive layer 34 in the photoelectric functional film are respectively connected to the electrodes, and the electrodes corresponding to the respective electrical divisions are connected to the common electrode 360 at the edge of the first conductive layer 34 so as to be led out. When there are two or more common electrodes 360, the common electrodes 360 can be located on the same side of the first conductive layer 34 to simplify the production process.

When the photoelectric functional film is in operation, controllable light adjustment can be implemented simply by connecting an external power supply to the electrodes in the first conductive layer 34. FIG. 5 illustrates a case where two electrodes of an external power supply 45 (alternating current) are respectively connected to the first electrode 361 and the fourth electrode 364. Specifically, the above photoelectric functional film can be operated as follows. When alternating current is applied to the electrodes connected to at least two electrical divisions in the first conductive layer 34, the optical divisions corresponding to the electrical divisions connected to the energized electrodes operate, while the optical divisions corresponding to the electrical divisions connected to the unenergized electrodes do not operate actively.

The case where two divisions in the photoelectric functional film are in operation includes the following.
1. When the first electrode 361 and the second electrode 362 are energized, the first optical division 331 and the second optical division 332 operate, while the third optical division 333 and the fourth optical division 334 do not operate actively.
2. When the first electrode 361 and the third electrode 363 are energized, the first optical division 331 and the third optical division 333 operate, while the second optical division 332 and the fourth optical division 334 do not operate actively.
3. As illustrated in FIG. 5, when the first electrode 361 and the fourth electrode 364 are energized, the first optical division 331 and the fourth optical division 334 operate, while the second optical division 332 and the third optical division 333 do not operate actively.
4. When the second electrode 362 and the third electrode 363 are energized, the second optical division 332 and the third optical division 333 operate, while the first optical division 331 and the fourth optical division 334 do not operate actively.
5. When the second electrode 362 and the fourth electrode 364 are energized, the first optical division 331 and the third optical division 333 operate, while the second optical division 332 and the fourth optical division 334 do not operate actively.

When three or more optical divisions are required to operate simultaneously, two or more electrodes can be connected in parallel and then energized. The specific operating method includes the following.
1. When the first electrode 361 and the second electrode 362 are connected in parallel and the first electrode 361 (or the second electrode 362) and the third electrode 363 are energized, the first optical division 331, the second optical division 332, and the third optical division 333 operate, while the fourth optical division 334 does not operate actively.
   It can be understood that, when the first electrode 361 and the third electrode 363 are connected in parallel and the first electrode 361 (or the third electrode 363) and the second electrode 362 are energized, or the second electrode 362 and the third electrode 363 are connected in parallel and the second electrode 362 (or the third electrode 363) and the first electrode 361 are energized, in the photoelectric functional film, the first optical division 331, the second optical division 332, and the third optical division 333 operate, while the fourth optical division 334 does not operate actively. That is, after the electrodes to be energized are selected, the specific combination for connecting the electrodes in parallel has no effect on the operating state of the optical divisions corresponding to the electrical divisions connected to the energized electrodes.
2. When the first electrode 361 and the second electrode 362 are connected in parallel and the first electrode 361 (or the second electrode 362) and the fourth electrode 364 are energized, the first optical division 331, the second optical division 332, and the fourth optical division 334 operate, while the third optical division 333 does not operate actively.
3. When the first electrode 361 and the third electrode 363 are connected in parallel and the first electrode 361 (or the third electrode 363) and the fourth electrode 364 are energized, the first optical division 331, the third optical division 333, and the fourth optical division 334 operate, while the second optical division 332 does not operate actively.
4. When the second electrode 362 and the third electrode 363 are connected in parallel and the second electrode 362 (or the third electrode 363) and the fourth electrode 364 are energized, the second optical division 332, the third optical division 333, and the fourth optical division 334 operate, while the first optical division 331 does not operate actively.
5. When the first electrode 361 and the second electrode 362 are connected in parallel, the third electrode 363 and the fourth electrode 364 are connected in parallel, and the first electrode 361 (or the second electrode 362) and the third electrode 363 (or the fourth electrode 364) are energized, the first optical division 331, the second optical division 332, the third optical division 333, and the fourth optical division 334 all operate.

Further, while the photoelectric functional layer 33 is operating or before the photoelectric functional layer 33 begins operating, a direct current may be applied to the second conductive layer 32, and the photoelectric functional layer 33 is heated using the second conductive layer 32. Thus, an operation response speed of an energized optical division in the photoelectric functional layer 33 can be improved. For example, SPD switchable films in the related art have a long operation response time in environments below -10°C. In the present embodiment, when the photoelectric functional layer 33 is an SPD switchable film, the photoelectric functional layer 33 can be heated by applying direct current to the second conductive layer 32, thereby shortening the operation response time of the photoelectric functional layer 33 in low temperature environments and improving the response speed.

During the operation of the photoelectric functional film, the voltage of the alternating current connected to the electrode in the first conductive layer 34 may be slightly higher than the voltage in the related art, or a material such as PET with a low sheet resistance may be used as the second substrate layer 31 and the first substrate layer 35. For example, PET with a sheet resistance of 10 Ω/□ to 40 Ω/□ may be used as the second substrate layer 31 and/or the first substrate layer 35 to obtain a low voltage drop.

FIG. 9 is a photograph of the photoelectric functional film (the material for the photoelectric functional layer 33 is PDLC) illustrated in FIG. 1 after alternating current is applied to the first electrode 361 and the fourth electrode 364. It can be seen that in this operating state, the first optical division 331 and the fourth optical division 334 operate, while the second optical division 332 and the third optical division 333 do not operate actively.

The photoelectric functional films illustrated in FIGS. 1 to 4 are subjected to a voltage test in the operating state. The frequencies measured at the first conductive layer 34 and the second conductive layer 32 are identical, while the voltage measured at the first conductive layer 34 is slightly greater than the voltage measured at the second conductive layer 32, but are in a similar level and do not affect normal operation.

### Embodiment 2

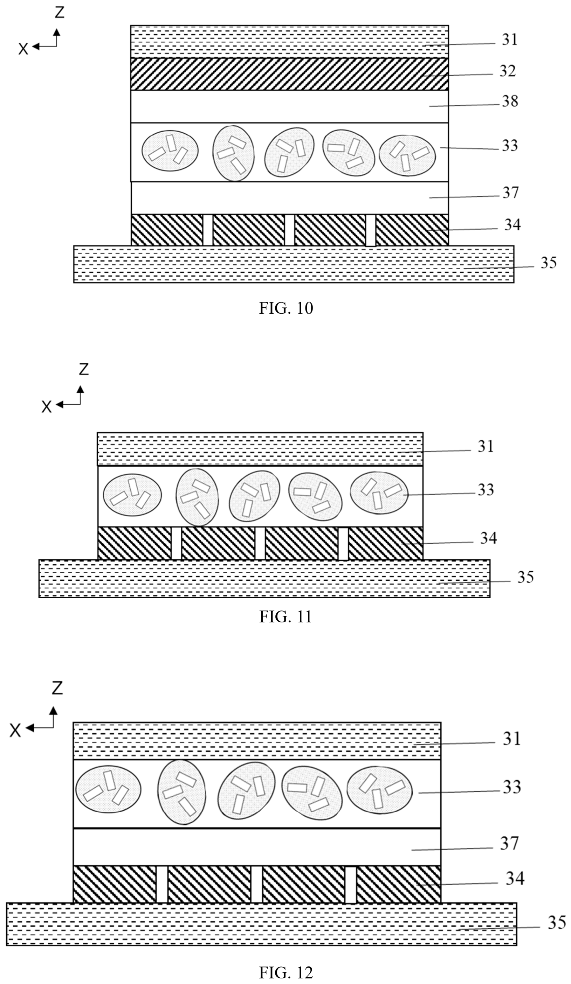

The present embodiment further provides a photoelectric functional film, the structure of which is similar to that of the photoelectric functional film of Embodiment 1, except that the photoelectric functional film of the present embodiment further includes a first insulating layer 37 and/or a second insulating layer 38. The first insulating layer 37 is located between the first conductive layer 34 and the photoelectric functional layer 33, and the second insulating layer 38 is located between the second conductive layer 32 and the photoelectric functional layer 33. The structure of the photoelectric functional film including the above two insulating layers at the same time is illustrated in FIG. 10.

Similarly, according to actual needs, a layer structure made of a conductive material, that is, a conductive layer other than the first conductive layer and the second conductive layer, may be further provided between the first conductive layer 34 and the photoelectric functional layer 33 and/or between the second conductive layer 32 and the photoelectric functional layer 33.

That is, an insulating layer and/or a conductive layer may be provided between the first conductive layer 34 and the photoelectric functional layer 33. Similarly, an insulating layer and/or a conductive layer may be provided between the second conductive layer 32 and the photoelectric functional layer 33.

By providing the first insulating layer 37 and/or the second insulating layer 38, the photoelectric functional film of the present embodiment can prevent the photoelectric functional layer 33 from electrical breakdown when an operating voltage is high. The provision of a conductive layer allows the photoelectric functional film to simultaneously perform other functions that require electrical power (such as heating) or functions that do not require electrical power (such as heat insulation and anti-fog).

### Embodiment 3

The present embodiment provides a photoelectric functional film, the structure of which is similar to that of the photoelectric functional film of Embodiment 1, except that the photoelectric functional film of the present embodiment does not include a second conductive layer. The structure of the photoelectric functional film is illustrated in FIG. 11.

Further, an insulating layer and/or other conductive layers may be provided between the first conductive layer 34 and the photoelectric functional layer 33. FIG. 12 illustrates a case where a first insulating layer 37 is provided between the first conductive layer 34 and the photoelectric functional layer 33.

Compared with the photoelectric functional film of Embodiment 1, the photoelectric functional film of the present embodiment may be provided with only the first conductive layer 34 and without the second conductive layer 32, thereby simplifying the structure of the photoelectric functional film. The provision of an insulating layer can prevent electrical breakdown of the photoelectric functional layer 33 when the operating voltage is high.

### Embodiment 4

The present embodiment provides a light-transmitting assembly. As illustrated in FIG. 13, the light-transmitting assembly includes a first light-transmitting plate 1, a first adhesive layer 2, a photoelectric functional film 3, a second adhesive layer 4, and a second light-transmitting plate 5.

The first light-transmitting plate 1 and the second light-transmitting plate 5 may be glass plates, and correspondingly, the light-transmitting assembly of the present embodiment may be a glass assembly.

The photoelectric functional film 3 may be the photoelectric functional film of Embodiment 1, Embodiment 2 or Embodiment 3. The photoelectric functional film of the present embodiment is the photoelectric functional film illustrated in FIG. 1 in Embodiment 1 (having the structure B in Embodiment 1).

The photoelectric functional film 3 is located between the first light-transmitting plate 1 and the second light-transmitting plate 5. The first adhesive layer 2 is sandwiched between the first light-transmitting plate 1 and the first substrate layer 35 in the photoelectric functional film 3. The second adhesive layer 4 is sandwiched between the first substrate layer 35 in the photoelectric functional film 3 and the second light-transmitting plate 5. The first adhesive layer 2 is connected to the second adhesive layer 4, and the connection between the first adhesive layer 2 and the second adhesive layer 4 is located between an upper surface and a lower surface (including the upper surface and the lower surface) of the first substrate layer 35. The upper surface of the first substrate layer 35 refers to a surface of the first substrate layer 35 that comes into contact with the first conductive layer 34, and the lower surface of the first substrate layer 35 refers to a surface opposite to the upper surface. In FIG. 13, the connection between the first adhesive layer 2 and the second adhesive layer 4 is located on the lower surface of the first substrate layer 35.

The first adhesive layer 2 is an EVA layer, and the second adhesive layer 4 is a PVB layer or an EVA layer. The material for the EVA layer may include common EVA, or EVA with a high UV blocking rate. The material for the PVB layer may include common PVB, or PVB with a high UV blocking rate. The UV cut-off wavelength of the EVA and PVB with a high UV blocking rate is greater than or equal to 390 nm, and is preferably 400 nm.

A method for preparing the light-transmitting assembly is as follows. The first light-transmitting plate 1, a raw adhesive film for the first adhesive layer 2, the photoelectric functional film 3, a raw adhesive film for the second adhesive layer 4, and the second light-transmitting plate 5 are stacked in sequence and are heated. The raw adhesive film for the first adhesive layer 2 and the raw adhesive film for the second adhesive layer 4 are melted in a high temperature and high pressure environment. The melted raw adhesive film for the first adhesive layer 2 bonds the first light-transmitting plate 1 to the second substrate layer 31 and then flows toward the first substrate layer 35, sealing a side opening between the second substrate layer 31 and the first substrate layer 35. The melted raw adhesive film for the second adhesive layer 4 bonds the first substrate layer 35 to the second light-transmitting plate 5 and continues to flow forward along the first substrate layer 35 until it comes into contact with the raw adhesive film for the first adhesive layer 2. At this point, the raw adhesive film for the first adhesive layer 2 is filled between the first light-transmitting plate 1 and the first substrate layer 35 of the photoelectric functional film 3, and the raw adhesive film for the second adhesive layer 4 is filled between the first substrate layer 35 of the photoelectric functional film 3 and the second light-transmitting plate 5. These components are then molded and laminated to obtain a light-transmitting assembly. Compared with the processes for producing laminated glass including a switchable film in the related art, the above preparation method provided by the present invention does not require the addition of a raw adhesive film for an adhesive layer of equal thickness on a side surface of a photoelectric functional film, which can significantly simplify the process flow.

When the second adhesive layer is a PVB layer, since the softening point of EVA as the material for the first adhesive layer is 70°C to 90°C and the softening point of PVB as the material for the second adhesive layer is greater than 100°C, the materials of the two adhesive layers have different fluidity at the same temperature. Therefore, the method for preparing the above light-transmitting assembly can be as follows.

The first light-transmitting plate 1, a raw adhesive film for the first adhesive layer 2, the photoelectric functional film 3, a raw adhesive film for the second adhesive layer 4, and the second light-transmitting plate 5 are stacked in sequence and are heated. The raw adhesive film for the first adhesive layer 2 are melted in a high temperature and high pressure environment. The melted raw adhesive film for the first adhesive layer 2 bonds the first light-transmitting plate 1 to the second substrate layer 31, then flows toward the first substrate layer 35 until it is completely leveled and fills a side opening between the second substrate layer 31 and the first substrate layer 35. The raw adhesive film for the second adhesive layer 4 is then melted, and the melted raw adhesive film for the second adhesive layer 4 bonds the first substrate layer 35 to the second light-transmitting plate 5. The melted raw adhesive film continues to flow forward along the first substrate layer 35 until it comes into contact with the raw adhesive film for the first adhesive layer 2. These components are then molded and laminated to obtain a light-transmitting assembly.

Compared with a light-transmitting assembly in which both the first adhesive layer and the second adhesive layer are EVA layers, mechanical properties of a light-transmitting assembly in which the first adhesive layer is an EVA layer and the second adhesive layer is a PVB layer can be further improved.

It can be understood that, when the photoelectric functional film 3 is replaced the one with the structure A in Embodiment 1, a method for preparing the light-transmitting assembly includes the following. The first light-transmitting plate 1, a raw adhesive film for the first adhesive layer 2, the photoelectric functional film 3, a raw adhesive film for the second adhesive layer 4, and the second light-transmitting plate 5 are stacked in sequence. The raw adhesive film for the first adhesive layer 2 and/or the second adhesive layer 4, which may have a thickness equal to or equivalent to the thickness of the photoelectric functional film 3, is provided on a side surface of the photoelectric functional film 3 and is heated. The raw adhesive film for the first adhesive layer 2 and the raw adhesive film for the second adhesive layer 4 are melted in a high temperature and high pressure environment until the melted raw adhesive film fills the space between the photoelectric functional film 3 and the first light-transmitting plate 1 and the second light-transmitting plate 5. These components are then molded and laminated to obtain a light-transmitting assembly.

FIG. 14 is a schematic structural diagram of a switchable film in the related art. As illustrated in FIG. 14, a switchable film in the related art includes a second substrate layer 61, a first conductive layer 63, a photoelectric functional layer 65, a second conductive layer 64 and a first substrate layer 62 that are arranged in a stacked manner in sequence. The second substrate layer 61 and the first substrate layer 62 are staggered and cut in half on the same side. A first FPC electrode 66 and a second FPC electrode 67 connect to the switchable film on a side where the second substrate layer 61 and the first substrate layer 62 are cut. The first FPC electrode 66 is connected to the first conductive layer 63, and the connection position of the first FPC electrode 66 and the first conductive layer 63 corresponds to a region where the second substrate layer 61 is not cut off. The first FPC electrode 66 is not in contact with the second conductive layer 64. The second FPC electrode 67 is connected to the second conductive layer 64, and the connection position of the second FPC electrode 67 and the second conductive layer 64 corresponds to a region where the first substrate layer 62 is not cut off. The second FPC electrode 67 is not electrically connected to the first conductive layer 63.

Compared with a design in the related art in which upper and lower substrates of a switchable film have the same size, or front and rear substrates are staggered and cut in half as illustrated in FIG. 14, the first substrate layer 35 of the photoelectric functional film in the present invention protrudes outward relative to the periphery of the other layers of the photoelectric functional film, making the side surface of the photoelectric functional film 3 a stepped structure. This allows the first substrate layer 35 to vertically divide the photoelectric functional film 3 into two spaces, with an orthographic projection of a side opening between the second substrate layer 31 and the first substrate layer 35 onto the first substrate layer 35 located within the edges of the first substrate layer 35. When the photoelectric functional film is subsequently encapsulated in a light-transmitting assembly using an adhesive film, a non-toxic EVA adhesive film is used on the upper surface of the first substrate layer 35 of the photoelectric functional film. An adhesive film that is less toxic to the photoelectric functional layer of the film is used to encapsulate the photoelectric functional layer 33 of the film, as well as the side opening between the second substrate layer 31 and the first substrate layer 35. The above structural arrangement can reduce the penetration of harmful contents in the adhesive film from the side into the interior of the photoelectric functional layer, thereby reducing a failure rate of the photoelectric functional layer of the photoelectric functional film or avoiding the failure of the photoelectric functional layer.

## Claims

1. A photoelectric functional film comprising:
a photoelectric functional layer (33), a first conductive layer (34), and a first substrate layer (35) that are arranged in a stacked manner, wherein
the first conductive layer (34) includes two or more electrical divisions insulated from each other, and each electrical division is connected to a corresponding electrode.

2. The photoelectric functional film according to claim 1, wherein
in the first conductive layer (34), the horizontal distance between adjacent electrical divisions is between 10 µm and 1 mm.

3. The photoelectric functional film according to claim 2, wherein
in the first conductive layer (34), the horizontal distance between adjacent electrical divisions is between 10 µm and 100 µm.

4. The photoelectric functional film according to claim 1, wherein
all the electrodes connected to the first conductive layer (34) are located on the same side, on opposite sides and/or on adjacent sides of the photoelectric functional layer (33).

5. The photoelectric functional film according to claim 1, wherein
a material for the photoelectric functional layer (33) includes one or more of LC, PDLC, GHLC, PNLC, PSLC, PILC, EC, and SPD.

6. The photoelectric functional film according to claim 1, wherein
the orthographic projections of the photoelectric functional layer (33) and the first conductive layer (34) onto the first substrate layer (35) are located within the periphery of a surface of the first substrate layer (35).

7. The photoelectric functional film according to claim 1, wherein
the photoelectric functional film further comprises a second substrate layer (31), and the second substrate layer (31) and the first substrate layer (35) are located at two opposite sides of the photoelectric functional layer (33) respectively.

8. The photoelectric functional film according to claim 7, wherein
the orthographic projection of the second substrate layer (31) onto the first substrate layer (35) is located within the periphery of the first substrate layer (35).

9. The photoelectric functional film according to claim 8, wherein
in the horizontal direction, the minimum distance from each point in the periphery of the orthographic projection of the second substrate layer (31) onto the first substrate layer (35) to the periphery of the first substrate layer (35) is between 5 mm and 30 mm.

10. The photoelectric functional film according to claim 8, wherein
the orthographic projection of the photoelectric functional layer (33) onto the second substrate layer (31) is located within the periphery of a surface of the second substrate layer (31), and the orthographic projection of the photoelectric functional layer (33) onto the first conductive layer (34) is located within the periphery of a surface of the first conductive layer (34).

11. The photoelectric functional film according to any one of claims 1 to 10, wherein
the photoelectric functional film further comprises a second conductive layer (32), and the second conductive layer (32) and the first conductive layer (34) are located at two opposite sides of the photoelectric functional layer (33) respectively.

12. The photoelectric functional film according to claim 11, wherein
the orthographic projection of the second conductive layer (32) onto the first substrate layer (35) is located within the periphery of the first substrate layer (35).

13. A light-transmitting assembly comprising:
a first light-transmitting plate (1);
an adhesive layer;
a second light-transmitting plate (5); and
a photoelectric functional film (3) including the photoelectric functional film according to any one of claims 1 to 12, wherein
the photoelectric functional film (3) is located between the first light-transmitting plate (1) and the second light-transmitting plate (5), and the adhesive layer is sandwiched between the first light-transmitting plate (1) and the photoelectric functional film (3) and between the photoelectric functional film (3) and the second light-transmitting plate (5).

14. The light-transmitting assembly according to claim 13, wherein
the adhesive layer includes a first adhesive layer (2) and a second adhesive layer (4), the first adhesive layer (2) is sandwiched between the first light-transmitting plate (1) and the first substrate layer (35) of the photoelectric functional film (3), and the second adhesive layer (4) is sandwiched between the first substrate layer (35) of the photoelectric functional film (3) and the second light-transmitting plate (5).

15. The light-transmitting assembly according to claim 14, wherein
the first adhesive layer (2) includes an EVA layer, and the second adhesive layer (4) includes a PVB layer and/or an EVA layer.

16. A method for preparing the light-transmitting assembly according to any one of claims 13 to 15, the method comprising:
stacking the first light-transmitting plate (1), a raw adhesive film for the adhesive layer, the photoelectric functional film (3), and the second light-transmitting plate (5) in sequence, followed by heating for molding and then laminating to obtain the light-transmitting assembly.

17. The method according to claim 16, further comprising:
stacking the first light-transmitting plate (1), a raw adhesive film for the first adhesive layer (2), the photoelectric functional film (3), a raw adhesive film for the second adhesive layer (4), and the second light-transmitting plate (5) in sequence, followed by heating for molding and then laminating to obtain the light-transmitting assembly, wherein
an operation of providing an adhesive film on a side surface of the photoelectric functional film (3) is not included.

18. A vehicle having glass that includes the light-transmitting assembly according to any one of claims 13 to 15.
